# EUROPEAN PATENT APPLICATION

(11) **EP 4 411 686 A1**
(43) Date of publication of application: **07.08.2024**
(21) Application number: 23746034.0
(22) Date of filing: 16.01.2023
(51) Int. Cl.: G08C 17/02, H04B 7/06

(54) **COMMUNICATION METHOD, DEVICE, AND STORAGE MEDIUM**

(30) Priority: 26.01.2022 CN 202210094626
(71) Applicant: ZTE Corporation, Shenzhen, Guangdong 518057 (CN)
(72) Inventor: YE, Zhengzheng, Shenzhen, Guangdong 518057 (CN)
(74) Representative: Regimbeau
(86) International application number: PCT/CN2023/072242
(87) International publication number: WO 2023/143152

(57) **Abstract**

Provided are a communication method and device and a storage medium. A communication method applied to a first communication node includes: sending array element activation signaling to a second communication node so that the second communication node adjusts a working state of an array element through the array element activation signaling, where the array element is coupled to the second communication node and is configured to transmit a cell signal.

## Description

### TECHNICAL FIELD

The present application relates to the communication field, for example, a communication method and device and a storage medium.

### BACKGROUND

Coverage improvement is one of the important problems which need to be solved in communication. Especially for millimeter-wave systems, they are easily affected by obstacles, so attenuation is caused, coverage performance becomes poor, and more blind regions are generated. A traditional communication system focuses only on the modification of a sender and the modification of a receiver. However, the regulation of an electromagnetic environment and a channel is implemented through the emergence of a reconfigurable intelligent surface. A reconfigurable intelligent surface (RIS) is an artificial electromagnetic material with a programmable electromagnetic characteristic. The direction, form, gain, and the like of an outgoing beam may be controlled through the RIS so that coverage holes are filled and weak coverage is improved.

The coverage performance of the RIS is related to various factors such as the number of array elements of a panel, a coverage distance, and the design of a codebook. In the case where factors such as the distance and the codebook are determined, the maximum gain in a coverage region will increase as the area of the panel (the number of array elements) increases. However, array-based characteristics cause a beam to become narrow. Even if a wide beam codebook is used, power and the coverage distance are reduced because the beam is widened, so reliable performance cannot be achieved. Therefore, an effective coverage range at a specific distance cannot be improved simply through the increase of the number of array elements or the control of the codebook.

### SUMMARY

An embodiment of the present application provides a communication method. The method is applied to a first communication node and includes the step below.

Array element activation signaling is sent to a second communication node so that the second communication node adjusts a working state of an array element through the array element activation signaling, where the array element is coupled to the second communication node and is configured to transmit a cell signal.

An embodiment of the present application provides a communication method. The method is applied to a second communication node and includes the steps below.

Array element activation signaling sent by a first communication node is received; and a working state of an array element is adjusted according to the array element activation signaling, where the array element is coupled to the second communication node and is configured to transmit a cell signal.

An embodiment of the present application provides a communication method. The communication method is applied to a third communication node and includes the steps below.

A to-be-optimized cell is determined according to key performance indicator (KPI) statistical information and user experience feedback information; and a coverage performance optimization instruction is sent to a first communication node so that the first communication node sends array element activation signaling to a second communication node and the second communication node adjusts a working state of an array element through the array element activation signaling, where the array element is coupled to the second communication node and is configured to transmit a cell signal, and the coverage performance optimization instruction is used for instructing that a coverage performance optimization operation is performed on the to-be-optimized cell in the second communication node.

An embodiment of the present application provides a communication device. The communication device includes a communication module, a memory, and one or more processors, where the communication module is configured to perform communication interaction with another communication node; the memory is configured to store one or more programs; and when the one or more programs are executed by the one or more processors, the one or more processors are caused to implement the communication method according to any one of the preceding embodiments.

An embodiment of the present application provides a storage medium storing a computer program, where the communication method according to any one of the preceding embodiments is implemented when the computer program is executed by a processor.

### BRIEF DESCRIPTION OF DRAWINGS

FIG. 1 is a flowchart of a communication method according to an embodiment of the present application;
FIG. 2 is a flowchart of another communication method according to an embodiment of the present application;
FIG. 3 is a flowchart of another communication method according to an embodiment of the present application;
FIG. 4 is a flowchart of another communication method according to an embodiment of the present application;
FIG. 5 is a schematic diagram of a configuration of an array element activation bitmap according to an embodiment of the present application;
FIG. 6 is a schematic diagram showing interaction for coverage performance optimization according to an embodiment of the present application;
FIG. 7 is a schematic diagram of a configuration of another array element activation bitmap according to an embodiment of the present application;
FIG. 8 is a schematic diagram of a configuration of another array element activation bitmap according to an embodiment of the present application;
FIG. 9 is a schematic diagram of a configuration of another array element activation bitmap according to an embodiment of the present application;
FIG. 10 is a schematic diagram of a configuration of another array element activation bitmap according to an embodiment of the present application;
FIG. 11 is a block diagram of a communication apparatus according to an embodiment of the present application;
FIG. 12 is a block diagram of another communication apparatus according to an embodiment of the present application;
FIG. 13 is a block diagram of another communication apparatus according to an embodiment of the present application; and
FIG. 14 is a structural diagram of a communication device according to an embodiment of the present application.

### DETAILED DESCRIPTION

Embodiments of the present application are described hereinafter in conjunction with the drawings. The present application is described below in conjunction with the embodiments and the drawings, and the examples illustrated are intended only to explain the present application.

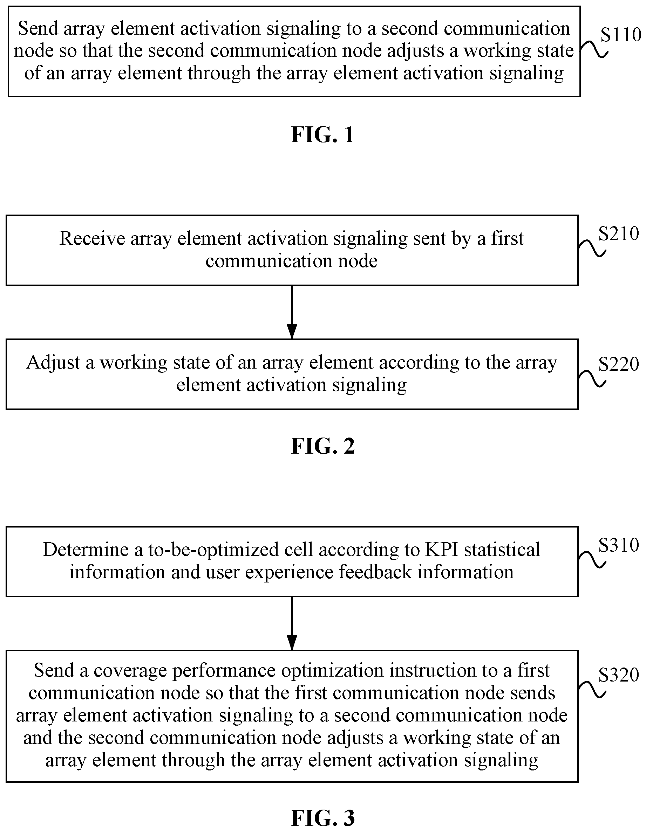

In an embodiment, FIG. 1 is a flowchart of a communication method according to an embodiment of the present application. This embodiment is applicable to the scenario where coverage performance is improved. This embodiment may be implemented by the first communication node. For example, the first communication node may be a base station. As shown in FIG. 1, this embodiment includes S 110.

In S 110, array element activation signaling is sent to a second communication node so that the second communication node adjusts a working state of an array element through the array element activation signaling.

The array element is coupled to the second communication node and is configured to transmit a cell signal. The array element refers to an element unit in the second communication node. In the embodiment, the second communication node may be composed of multiple array elements. The cell signal may include any signal used for communication. For example, the cell signal includes a radio signal, an electromagnetic signal, an optical signal, and the like, including but not limited to, a 2-generation wireless telephone technology (2G) signal, a 3G signal, a 4G signal, and a 5G signal. In the embodiment, the array element is coupled to the second communication node, which may be understood as the establishment of the communication connection, electrical connection, or physical connection between the array element and the second communication node. The connection mode is related to a device of the second communication node. In the embodiment, the cell signal sent by the first communication node may be forwarded to a terminal by the second communication node through the array element, which may be understood as follows: the array element refers to part of a structure included in the second communication node, that is, the array element is a component of the second communication node and is configured to perform secondary propagation on the cell signal. For example, the array element may perform transmission or reflection on a received cell signal. The array element may also be represented by an element, which is not limited.

In the embodiment, the second communication node refers to a network relay node. For example, the second communication node may be an RIS panel or a network-controlled repeater. In the embodiment, the array element activation signaling refers to an instruction to adjust the working state of the array element in the second communication node or may be understood as an instruction to adjust the activation state of the array element, the total number of activated array elements, the horizontal interval between activated array elements, and the vertical interval between activated array elements in the second communication node.

In the embodiment, the first communication node sends the array element activation signaling to the second communication node so that the second communication node adjusts working states of included array elements according to the array element activation signaling. That is, the activation states of the array elements, the number of activated array elements, the horizontal interval between the activated array elements, and the vertical interval between the activated array elements in the second communication node are adjusted so that the array elements in the second communication node reach optimal working states, thereby causing the second communication node to achieve optimal coverage performance.

In an embodiment, the communication method applied to the first communication node further includes the step below.

A coverage performance optimization instruction sent by a third communication node is received or a coverage performance optimization instruction is generated in advance, where the coverage performance optimization instruction is used for instructing that a coverage performance optimization operation is performed on a to-be-optimized cell in the second communication node.

In the embodiment, before the first communication node sends the array element activation signaling to the second communication node, the first communication node may receive the coverage performance optimization instruction sent by the third communication node, or the first communication node generates the coverage performance optimization instruction, which may be understood as follows: only after receiving the coverage performance optimization instruction or generating the coverage performance optimization instruction, the first communication node may send an array element activation instruction to the second communication node. The third communication node refers to a management background or may be understood as a management server. In the embodiment, a parameter related to the to-be-optimized cell is carried in the coverage performance optimization instruction so that the first communication node may determine, according to the received or generated coverage performance optimization instruction, a region with relatively poor coverage performance, that is, a region (that is, the to-be-optimized cell) in which coverage performance needs to be optimized. Then the first communication node sends the array element activation signaling to the second communication node so that the second communication node adjusts the working state of the to-be-optimized cell according to the array element activation signaling, thereby improving the coverage performance of the to-be-optimized cell.

In an embodiment, the communication method applied to the first communication node further includes the step below.

An optimal array element activation mode of the to-be-optimized cell in the second communication node is determined according to the current coverage performance of the to-be-optimized cell and expected coverage performance of the to-be-optimized cell. In the embodiment, the coverage performance may be characterized by a coverage range and reference signal receiving power (RSRP), which may be understood as follows: the current coverage performance refers to the current coverage range of the to-be-optimized cell and the current RSRP of the to-be-optimized cell, and the expected coverage performance refers to an expected coverage range of the to-be-optimized cell and an RSRP threshold of the to-be-optimized cell. In the embodiment, the optimal array element activation mode refers to an array element activation mode through which the optimal coverage performance can be achieved. In an embodiment, the optimal array element activation mode includes the following parameters: an optimal activation state of the array element and the optimal activation number of the array element. In the embodiment, the optimal activation state of the array element refers to the optimal activation state of all the array elements in the second communication node, where two types of activation states are included: an activated state and an inactivated state. In an embodiment, the activated state includes transmission and reflection. In the embodiment, the optimal activation number of the array element refers to the optimal number of array elements in the activated state in the second communication node. That is, in the case where the number of array elements in the activated state in the second communication node reaches the optimal activation number, the optimal coverage performance of the to-be-optimized cell can be achieved.

In the embodiment, before the first communication node sends the array element activation signaling to the second communication node, the first communication node may determine the optimal array element activation mode of the to-be-optimized cell in the second communication node according to the current coverage performance of the to-be-optimized cell and the expected coverage performance of the to-be-optimized cell. In the embodiment, the first communication node adjusts the working state of the array element according to the difference between the current coverage performance of the to-be-optimized cell and the expected coverage performance of the to-be-optimized cell so that the current coverage performance reaches the expected coverage performance, which may be understood as follows: the optimal array element activation mode refers to an array element activation mode corresponding to the expected coverage performance.

In an embodiment, the communication method applied to the first communication node further includes the steps below.

First reception acknowledgement signaling which is fed back by the second communication node and corresponds to the array element activation signaling is received; and codebook indication signaling or directivity signaling is sent to the second communication node so that the second communication node switches to a corresponding beam according to the codebook indication signaling or the directivity signaling.

In the embodiment, the first reception acknowledgement signaling is used for indicating that the second communication node successfully receives the array element activation signaling. In the embodiment, after the second communication node successfully receives the array element activation signaling sent by the first communication node, the second communication node feeds back the first reception acknowledgement signaling to the first communication node so that the first communication node is aware that the second communication node successfully receives the array element activation signaling. Of course, in the case where the second communication node fails to receive the array element activation signaling sent by the first communication node, the second communication node may feed back first reception failure signaling to the first communication node or does not feed back any message, which may be understood as follows: the first communication node receives the first reception failure signaling or does not receive any message, which indicates that the second communication node fails to receive the array element activation signaling.

In the embodiment, in the case where the second communication node is the RIS panel, the first communication node sends the codebook indication signaling to the second communication node so that the second communication node adjusts a corresponding codebook according to the codebook indication signaling and switches to the beam corresponding to the codebook. In the embodiment, the codebook indication signaling is used for indicating information related to the used codebook. In an embodiment, the codebook indication signaling may carry one of the following: a codebook index number or a codebook, which may be understood as follows: the first communication node delivers the codebook indication signaling to the second communication node so that the second communication node reads the corresponding codebook and causes the corresponding codebook to be effective according to the codebook index number or the first communication node directly delivers the codebook to the second communication node so that the second communication node directly causes the code book to take effect, and then the second communication node searches for the beam corresponding to the codebook and switches to the beam corresponding to the codebook. Of course, a beam direction, the number of radiated beams, a beam form, and a beam shape may also be adjusted through the codebook indication signaling, which may be understood as follows: in the case where the beam direction, the number of radiated beams, the beam form, and the beam shape are adjusted through the codebook indication signaling, the corresponding codebook is adjusted according to the codebook indication signaling so that the beam direction, the number of radiated beams, the beam form, and the beam shape are adjusted through the codebook.

In the embodiment, in the case where the second communication node is the network-controlled repeater, the first communication node sends the directivity signaling to the second communication node so that the second communication node adjusts the corresponding beam according to the directivity signaling. In the embodiment, the directivity signaling refers to signaling used for adjusting the radiation direction (the radiation angle) of a beam. In the embodiment, the directivity signaling may indicate at least one of the following: the beam direction, the beam form, the number of radiated beams, or the beam shape. The beam form may include the horizontal width of the beam and the vertical width of the beam (for example, the horizontal width is greater than the vertical width, or the horizontal width is less than the vertical width). The number of radiated beams refers to the number of beams which are radiated, for example, a single beam or multiple beams may be radiated. The beam shape refers to the shape of a radiated beam, for example, the beam shape may be a rectangle or a circle.

In an embodiment, the communication method applied to the first communication node further includes the step below.

Second reception acknowledgement signaling which is fed back by the second communication node and corresponds to the codebook indication signaling or the directivity signaling is received. In the embodiment, the second reception acknowledgement signaling is used for indicating that the second communication node successfully receives the codebook indication signaling or the directivity signaling. In the embodiment, after the second communication node successfully receives the codebook indication signaling or the directivity signaling sent by the first communication node, the second communication node feeds back the second reception acknowledgement signaling to the first communication node so that the first communication node is aware that the second communication node successfully receives the codebook indication signaling or the directivity signaling. Of course, in the case where the second communication node fails to receive the codebook indication signaling or the directivity signaling sent by the first communication node, the second communication node may feed back second reception failure signaling to the first communication node or does not feed back any message, which may be understood as follows: the first communication node receives the second reception failure signaling or does not receive any message, which indicates that the second communication node fails to receive the codebook indication signaling or the directivity signaling.

In an embodiment, after the second communication node switches to the corresponding beam according to the codebook indication signaling or the directivity signaling, the method further includes the steps below.

The current coverage performance of the second communication node is re-counted; and if the current coverage performance does not reach the expected coverage performance, the expected coverage performance is readjusted.

In the embodiment, after the second communication node switches to the corresponding beam according to the codebook indication signaling or the directivity signaling, it is determined whether the current coverage performance of the second communication node reaches the expected coverage performance. If the current coverage performance reaches the expected coverage performance, normal scheduling is performed. If the current coverage performance does not reach the expected coverage performance, the expected coverage performance is readjusted, that is, the expected coverage range and the RSRP threshold are reduced, so that the current coverage performance reaches the expected coverage performance as much as possible.

In an embodiment, the array element activation signaling includes at least one of the following: a coverage performance adjustment instruction or the optimal array element activation mode, where the coverage performance adjustment instruction includes at least one of the following: a coverage range adjustment instruction or an RSRP adjustment instruction, and the optimal array element activation mode includes the following parameters: the optimal activation state of the array element and the optimal activation number of the array element. In the embodiment, the coverage performance adjustment instruction and/or the optimal array element activation mode may be carried in the array element activation signaling sent by the first communication node to the second communication node. The coverage performance adjustment instruction refers to an instruction indicating the degree to which the expected coverage performance needs to be adjusted so that the current coverage performance reaches the expected coverage performance. The optimal array element activation mode refers to the array element activation mode corresponding to the expected coverage performance. In the embodiment, the coverage performance adjustment instruction includes an instruction to adjust the coverage range and an instruction to adjust the RSRP.

In an embodiment, the coverage performance adjustment instruction includes at least one of the following: a reflection beam coverage distance adjustment instruction, a reflection beam coverage width adjustment instruction, a reflection beam state adjustment instruction, or an array element activation bitmap.

In an embodiment, the reflection beam coverage distance adjustment instruction is used for indicating one of the following: the horizontal interval between activated array elements, the vertical interval between activated array elements, or the total number of activated array elements, the reflection beam coverage width adjustment instruction is used for indicating one of the following: the total number of horizontal activated array elements or the total number of vertical activated array elements, and the reflection beam state adjustment instruction is used for indicating an array element activation state.

In an embodiment, the array element activation state includes one of the following: the activated state or the inactivated state, where the activated state includes the transmission or the reflection.

In an embodiment, the array element activation bitmap is used for indicating the activation state of each array element in the second communication node or may be used for indicating different activated states of each element such as the transmission and reflection of each element. For example, in the case where the array element activation bitmap is used for indicating the activation state of each array element in the second communication node, each array element may include the activated state and the inactivated state, where 0 and 1 may be used for representing different array element activation states. For example, 0 represents the inactivated state and 1 represents the activated state. In an embodiment, the array element activation bitmap may be used for representing not only the activation state of the array element but also a specific activated state of the array element (for example, the transmission or the reflection). The three different identifiers, 0, 1, and 2, may be used for representing different states. For example, 0 represents the inactivated state, 1 represents the transmission, and 2 represents the reflection.

In an embodiment, the array element activation signaling is included in one of the following signaling: a physical downlink control channel (PDCCH), medium access control-control element (MAC-CE) signaling, or radio resource control (RRC) signaling. In the embodiment, the first communication node may transmit the array element activation signaling through a control channel directly or through higher-layer signaling. For example, in the case where the array element activation signaling is transmitted through the control channel, the array element activation signaling may be transmitted through the PDCCH, and in the case where the array element activation signaling is transmitted through the higher-layer signaling, the array element activation signaling may be transmitted through the MAC-CE signaling or the RRC signaling.

In an embodiment, the coverage performance optimization instruction includes at least one of the following: a maximum coverage distance, a maximum coverage range, the horizontal width of a coverage region and the vertical width of the coverage region, or an RSRP threshold of a coverage region. In an embodiment, the maximum coverage distance refers to a maximum distance which can be covered by a beam corresponding to the array element in the second communication node, the maximum coverage range refers to a maximum range that can be covered by the beam corresponding to the array element in the second communication node, the horizontal width of the coverage region and the vertical width of the coverage region refer to the width of the coverage region in a horizontal direction and the width of the coverage region in a vertical direction, respectively, and the RSRP threshold of the coverage region refers to minimum RSRP of the coverage region.

In an embodiment, each of the codebook indication signaling and the directivity signaling is used for indicating at least one of the following parameters: the horizontal width of a beam and the vertical width of the beam, the number of radiated beams, a beam shape, or a beam form, where the codebook indication signaling carries one of the following: a codebook index number or a codebook. In the embodiment, the horizontal width of the beam and the vertical width of the beam refer to the width of the beam in the horizontal direction and the width of the beam in the vertical direction, respectively, that is, the direction of the beam in the preceding embodiment. For the explanations for the number of radiated beams, the beam shape, and the beam form, reference is made to the description in the preceding embodiment, and the details are not repeated here.

In an embodiment, an activation mode of the array element in the second communication node includes one of the following: a mode in which the maximum total number of activated array elements in the horizontal direction is the same as the maximum total number of activated array elements in the vertical direction, an interval activation mode, a horizontal-direction and vertical-direction differentiation activation mode, or an activation mode optimized and iterated according to the expected coverage performance. In the embodiment, the maximum total number of activated array elements in the second communication node in the horizontal direction may be the same as the maximum total number of activated array elements in the second communication node in the vertical direction, for example, the maximum total number of activated array elements in the horizontal direction and the maximum total number of activated array elements in the vertical direction refer to the maximum number of array elements which may be activated in the horizontal direction and the maximum number of array elements which may be activated in the vertical direction, the interval activation mode refers to that the array elements in the second communication node are activated at intervals, and the horizontal-direction and vertical-direction differentiation activation mode refers to an activation mode used for the array elements in the second communication node in the case where a coverage angle and a coverage range in the horizontal direction are different from a coverage angle and a coverage range in the vertical direction. In the embodiment, in the case where the optimal coverage performance is achieved according to different scenarios, the activation mode may be optimized and iterated according to the expected coverage performance.

In an embodiment, the interval activation mode is applicable to one of the following cases: the case where a carrier frequency varies or the case where at least two beams are generated, and the horizontal-direction and vertical-direction differentiation activation mode is applicable to one of the following cases: the case where a horizontal coverage angle is different from a vertical coverage angle or the case where a horizontal coverage range is different from a vertical coverage range. In the embodiment, in the case where the carrier frequency varies or the case where multiple beams need to be generated, the interval between array elements in the second communication node which are capable of being activated may be calculated according to an actual frequency. For example, each of the horizontal interval between the activated array elements and the vertical interval between the activated array elements may be set to 2. In the embodiment, in the case where the horizontal coverage angle is different from the vertical coverage angle or the case where the horizontal coverage range is different from the vertical coverage range, the horizontal-direction and vertical-direction differentiation activation mode may be used for controlling the variation of a beam width and the variation of a beam coverage area.

In an embodiment, FIG. 2 is a flowchart of another communication method according to an embodiment of the present application. This embodiment is applicable to the scenario where coverage performance is improved. This embodiment may be implemented by a second communication node. For example, the second communication node may be an RIS panel or a network-controlled repeater. As shown in FIG. 2, this embodiment includes S210 and S220.

In S210, array element activation signaling sent by a first communication node is received.

In S220, a working state of an array element is adjusted according to the array element activation signaling.

The array element is coupled to the second communication node and is configured to transmit a cell signal.

In the embodiment, after the second communication node receives the array element activation signaling sent by the first communication node, the second communication node adjusts working states of array elements according to the array element activation signaling. That is, the activation states of the array elements, the number of activated array elements, the horizontal interval between the activated array elements, and the vertical interval between the activated array elements in the second communication node are adjusted so that the array elements in the second communication node reach optimal working states, thereby causing the second communication node to achieve optimal coverage performance.

In an embodiment, the communication method applied to the second communication node further includes the steps below.

First reception acknowledgement signaling corresponding to the array element activation signaling is fed back to the first communication node; codebook indication signaling or directivity signaling sent by the first communication node is received; and a switch to a corresponding beam is performed according to the codebook indication signaling or the directivity signaling.

In an embodiment, the communication method applied to the second communication node further includes the step below.

Second reception acknowledgement signaling corresponding to the codebook indication signaling or the directivity signaling is fed back to the first communication node.

In an embodiment, the array element activation signaling includes at least one of the following: a coverage performance adjustment instruction or an optimal array element activation mode, where the coverage performance adjustment instruction includes at least one of the following: a coverage range adjustment instruction or an RSRP adjustment instruction, and the optimal array element activation mode includes the following parameters: an optimal activation state of the array element and the optimal activation number of the array element.

In an embodiment, the coverage performance adjustment instruction includes at least one of the following: a reflection beam coverage distance adjustment instruction, a reflection beam coverage width adjustment instruction, a reflection beam state adjustment instruction, or an array element activation bitmap.

In an embodiment, the reflection beam coverage distance adjustment instruction is used for indicating one of the following: the horizontal interval between activated array elements, the vertical interval between activated array elements, or the total number of activated array elements, the reflection beam coverage width adjustment instruction is used for indicating one of the following: the total number of horizontal activated array elements or the total number of vertical activated array elements, and the reflection beam state adjustment instruction is used for indicating an array element activation state.

In an embodiment, the array element activation state includes one of the following: an activated state or an inactivated state, where the activated state includes transmission or reflection.

In an embodiment, the array element activation signaling is included in one of the following signaling: a PDCCH, MAC-CE signaling, or RRC signaling.

In an embodiment, the coverage performance optimization instruction includes at least one of the following: a maximum coverage distance, a maximum coverage range, the horizontal width of a coverage region and the vertical width of the coverage region, or an RSRP threshold of a coverage region.

In an embodiment, each of the codebook indication signaling and the directivity signaling is used for indicating at least one of the following parameters: the horizontal width of a beam and the vertical width of the beam, the number of radiated beams, a beam shape, or a beam form, where the codebook indication signaling carries one of the following: a codebook index number or a codebook.

In an embodiment, an activation mode of the array element in the second communication node includes one of the following: a mode in which the maximum total number of activated array elements in the horizontal direction is the same as the maximum total number of activated array elements in the vertical direction, an interval activation mode, a horizontal-direction and vertical-direction differentiation activation mode, or an activation mode optimized and iterated according to expected coverage performance.

In an embodiment, the interval activation mode is applicable to one of the following cases: the case where a carrier frequency varies or the case where at least two beams are generated, and the horizontal-direction and vertical-direction differentiation activation mode is applicable to one of the following cases: the case where a horizontal coverage angle is different from a vertical coverage angle or the case where a horizontal coverage range is different from a vertical coverage range.

For the explanation of each parameter in the communication method applied to the second communication node, reference may be made to a description of the corresponding parameter in the communication method of the first communication node in the preceding facts. The details are not repeated here.

In an embodiment, FIG. 3 is a flowchart of another communication method according to an embodiment of the present application. This embodiment is applicable to the scenario in which coverage performance is improved. This embodiment may be implemented by a third communication node. For example, the third communication node may be a management background or a management server. As shown in FIG. 3, this embodiment includes S310 and S320.

In S310, a to-be-optimized cell is determined according to key performance indicator (KPI) statistical information and user experience feedback information.

The KPI statistical information refers to the result of the evaluation of traffic metrics according to the target of the traffic metrics, and the user experience feedback information refers to use experience in the process where a user (that is, a terminal) communicates with a cell in a base station, which may be understood as follows: according to the KPI statistical information and/or the user experience feedback information, the third communication node may determine a region which needs to be optimized and determine an expected coverage range of the to-be-optimized cell and a minimum RSRP value (that is, an RSRP threshold) of the to-be-optimized cell.

In S320, a coverage performance optimization instruction is sent to a first communication node so that the first communication node sends array element activation signaling to a second communication node and the second communication node adjusts a working state of an array element through the array element activation signaling.

The array element is coupled to the second communication node and is configured to transmit a cell signal. The coverage performance optimization instruction is used for instructing that a coverage performance optimization operation is performed on the to-be-optimized cell in the second communication node.

In the embodiment, after the third communication node determines the to-be-optimized cell, the third communication node sends the coverage performance optimization instruction carrying a parameter related to the to-be-optimized cell to the first communication node so that the first communication node sends the array element activation signaling to the second communication node, and after the second communication node receives the array element activation signaling, the second communication node adjusts the working state of the array element through the array element activation signaling. That is, activation states of array elements, the number of activated array elements, the horizontal interval between the activated array elements, and the vertical interval between the activated array elements in the second communication node are adjusted so that the array elements in the second communication node reach optimal working states, thereby causing the second communication node to achieve optimal coverage performance.

In an embodiment, the array element activation signaling includes at least one of the following: a coverage performance adjustment instruction or an optimal array element activation mode, where the coverage performance adjustment instruction includes at least one of the following: a coverage range adjustment instruction or an RSRP adjustment instruction, and the optimal array element activation mode includes the following parameters: an optimal activation state of the array element and the optimal activation number of the array element.

In an embodiment, the coverage performance adjustment instruction includes at least one of the following: a reflection beam coverage distance adjustment instruction, a reflection beam coverage width adjustment instruction, a reflection beam state adjustment instruction, or an array element activation bitmap.

In an embodiment, the reflection beam coverage distance adjustment instruction is used for indicating one of the following: the horizontal interval between activated array elements, the vertical interval between activated array elements, or the total number of activated array elements, the reflection beam coverage width adjustment instruction is used for indicating one of the following: the total number of horizontal activated array elements or the total number of vertical activated array elements, and the reflection beam state adjustment instruction is used for indicating an array element activation state.

In an embodiment, the array element activation state includes one of the following: an activated state or an inactivated state, where the activated state includes transmission or reflection.

In an embodiment, the array element activation signaling is included in one of the following signaling: a PDCCH, MAC-CE signaling, or RRC signaling.

In an embodiment, the coverage performance optimization instruction includes at least one of the following: a maximum coverage distance, a maximum coverage range, the horizontal width of a coverage region and the vertical width of the coverage region, or an RSRP threshold of a coverage region.

In an embodiment, each of codebook indication signaling and directivity signaling is used for indicating at least one of the following parameters: the horizontal width of a beam and the vertical width of the beam, the number of radiated beams, a beam shape, or a beam form, where the codebook indication signaling carries one of the following: a codebook index number or a codebook.

In an embodiment, an activation mode of the array element in the second communication node includes one of the following: a mode in which the maximum total number of activated array elements in the horizontal direction is the same as the maximum total number of activated array elements in the vertical direction, an interval activation mode, a horizontal-direction and vertical-direction differentiation activation mode, or an activation mode optimized and iterated according to expected coverage performance.

In an embodiment, the interval activation mode is applicable to one of the following cases: the case where a carrier frequency varies or the case where at least two beams are generated, and the horizontal-direction and vertical-direction differentiation activation mode is applicable to one of the following cases: the case where a horizontal coverage angle is different from a vertical coverage angle or the case where a horizontal coverage range is different from a vertical coverage range.

For the explanation of each parameter in the communication method applied to the third communication node, reference may be made to a description of the corresponding parameter in the communication method of the first communication node in the preceding facts. The details are not repeated here.

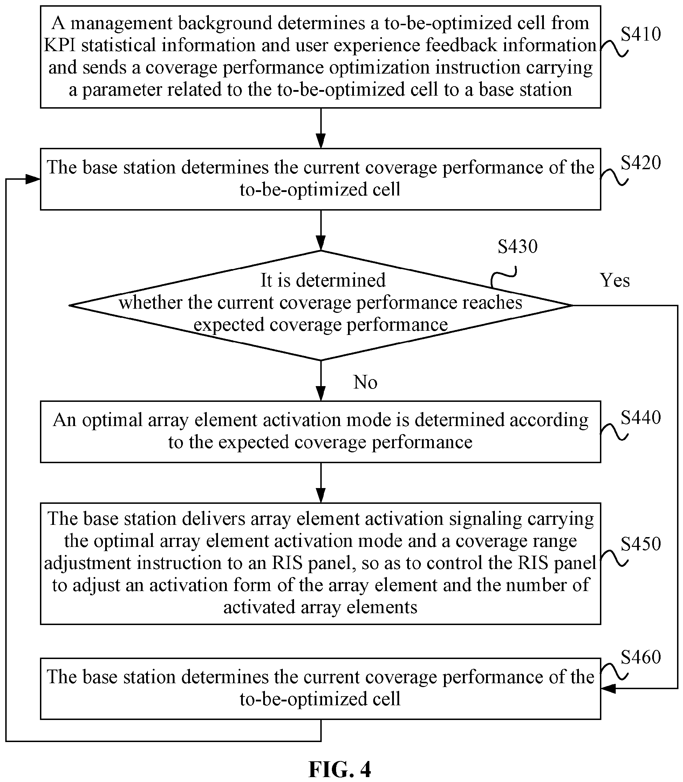

In an embodiment, FIG. 4 is a flowchart of another communication method according to an embodiment of the present application. This embodiment is applicable to the case where the coverage performance of a second communication node is optimized. In this embodiment, a coverage performance optimization process is described with an example in which a first communication node is a base station, the second communication node is an RIS panel, and a third communication node is a management background. As shown in FIG. 4, a communication method in this embodiment includes S410 to S460.

In S410, the management background determines a to-be-optimized cell from KPI statistical information and user experience feedback information and sends a coverage performance optimization instruction carrying a parameter related to the to-be-optimized cell to the base station.

The to-be-optimized cell refers to a region with a relatively low current reception RSRP value and a relatively small current coverage range. In the embodiment, the management background reads a region with a relatively small coverage range and relatively weak reception RSRP from the KPI statistical information and the user experience feedback information, notifies the base station in this region to implement a coverage performance improvement, and sends coverage performance optimization signaling to the base station. The coverage performance optimization signaling includes one or more of the following: a maximum coverage distance, a maximum coverage area, the horizontal width of a coverage region and the vertical width of the coverage region, or an RSRP threshold of a coverage region (that is, a minimum RSRP value of the coverage region).

In S420, the base station determines the current coverage performance of the to-be-optimized cell.

The current coverage performance may include a currently available coverage range and current reception RSRP. In the embodiment, the base station counts an actual available coverage range and actual RSRP through information reported by UEs in a current cell and makes an emphasis mark on a UE with relatively weak RSRP.

In S430, it is determined whether the current coverage performance reaches expected coverage performance. If not, S440 is performed. If yes, S460 is performed.

In S440, an optimal array element activation mode is determined according to the expected coverage performance.

In the embodiment, the base station may calculate an optimal activation form of an array element and the optimal number of activated array elements in the RIS panel according to an expected coverage range and the minimum RSRP value. For an inactivated array element in a sleep state, power-on real-time codebook control and element phase adjustment are not performed in a subsequent long period. Therefore, energy can be saved.

In S450, the base station delivers array element activation signaling carrying the optimal array element activation mode and a coverage range adjustment instruction to the RIS panel, so as to control the RIS panel to adjust an activation form of the array element and the number of activated array elements.

In the embodiment, the base station delivers the coverage range adjustment instruction to the RIS panel, where adjustable factors include one or more of the following: a reflection beam coverage distance adjustment instruction, a reflection beam coverage width adjustment instruction, a reflection beam state adjustment instruction, or an array element activation bitmap.

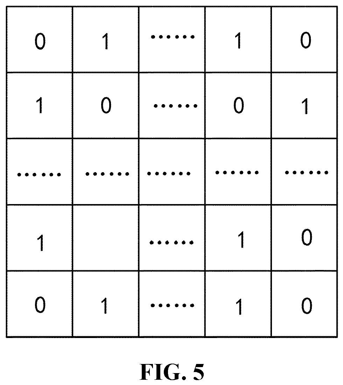

The reflection beam coverage distance adjustment instruction includes the horizontal interval between activated array elements, the vertical interval between activated array elements, the total number of activated elements, and the like. The reflection beam coverage width adjustment instruction includes: the number of horizontal array elements, the number of vertical array elements, and the like. The reflection beam form adjustment instruction includes an array element activation form, the array element activation bitmap, and the like. The array element activation bitmap represents the activation state of each array element in the RIS panel and may also be used for controlling different activated states of each array element such as transmission and reflection. The array element refers to an element unit in the RIS panel. In the embodiment, one RIS panel may include multiple array elements, and the activation state of each array element is indicated by the array element activation bitmap, which may be understood as follows: the array element activation bitmap is used for indicating the activation states of all the array elements in the RIS panel, that is, each element in the array element activation bitmap represents the activation state of one array element. For example, in the case where the RIS panel includes 16 array elements, the array element activation bitmap includes 16 elements, and each element represents the activation state of one array element. For example, FIG. 5 is a schematic diagram of a configuration of an array element activation bitmap according to an embodiment of the present application. An indication form example of the array element activation bitmap is shown in FIG. 5, where 1 represents an activated state and 0 represents an inactivated state.

In S460, normal scheduling is performed.

In the embodiment, for different scenarios, different array element activation forms of the RIS panel may be adjusted. The following factors are used as examples: the interval between activated array elements, the total number of activated array elements in a horizontal direction and the total number of activated array elements in a vertical direction, and the activation state of the array element.

In the embodiment, the interval between the activated array elements is adjusted: the activated array elements may be arranged at intervals so that power control under multiple beams and a fixed beam width is implemented and the variation of an array spacing caused by frequency variation may be adapted to so that the case is avoided where factors such as a frequency vary, causing the RIS to be manufactured and deployed repeatedly.

In the embodiment, the number of horizontal array elements and the number of vertical array elements (or pore sizes) are adjusted: different beam coverage widths are required for different scenarios such as buildings, roads, and squares so that effective and targeted coverage can be implemented and power waste is avoided.

In the embodiment, the activation state of the array element is adjusted: planar arrays of different forms, such as a square planar array, a circular planar array, and an elliptical planar array may be activated, and an optimal activation state is calculated according to the expected coverage performance so that the optimization of a coverage area and RSRP is implemented.

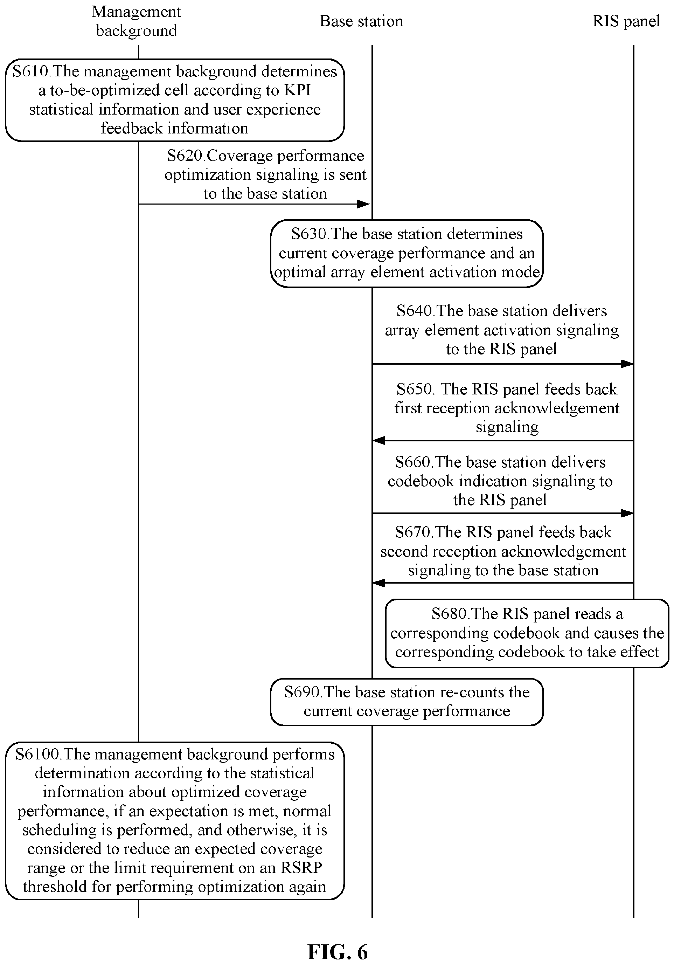

In an embodiment, FIG. 6 is a schematic diagram showing interaction for coverage performance optimization according to an embodiment of the present application. In this embodiment, a coverage performance optimization process is described with an example in which a first communication node is a 5Gbase station, a gNB, a second communication node is an RIS panel, and a third communication node is a management background, where the management background is controlled by a cell manager, and the cell manager is responsible for determining a to-be-optimized cell according to KPI statistical information and user experience feedback information and determining an expected coverage range of the to-be-optimized cell and a minimum RSRP threshold of the to-be-optimized cell. As shown in FIG. 6, an interaction process of the coverage performance optimization in this embodiment includes S610 to S6100.

In S610, the management background determines the to-be-optimized cell according to the KPI statistical information and the user experience feedback information.

In the embodiment, the to-be-optimized cell refers to a region in which coverage performance optimization needs to be performed.

In S620, coverage performance optimization signaling is sent to the base station.

In the embodiment, the coverage performance optimization signaling includes one or more of the following: a maximum coverage distance, a maximum coverage area, the horizontal width of a coverage region and the vertical width of the coverage region, or minimum RSRP of a coverage region.

In S630, the base station determines current coverage performance and an optimal array element activation mode.

In the embodiment, the base station counts the coverage of a current cell with reception RSRP information reported by UEs and determines the interval between current RSRP and an expected RSRP threshold, where the current RSRP is lower than the expected RSRP threshold. In the embodiment, the base station calculates an optimal activation mode of array elements in the RIS panel according to the distribution of the UEs, an expected coverage area, and the RSRP threshold.

In S640, the base station delivers array element activation signaling to the RIS panel.

In the embodiment, the array element activation signaling may be transmitted in the form of the total number of activated array elements, the number of horizontal activated array elements and the number of vertical activated array elements, an activation bitmap, or the like, so that the activation state of each array element is transmitted to the RIS panel.

In S650, the RIS panel feeds back first reception acknowledgement signaling.

In the embodiment, after the RIS panel receives the array element activation signaling, the RIS panel feeds back reception success information (that is, the first reception acknowledgement signaling) to the base station, if the RIS panel does not receive the array element activation signaling, the RIS panel feeds back first reception failure signaling to the base station, and if the base station receives the reception failure information of the RIS panel and does not receive the acknowledgement information, the array element activation signaling is retransmitted.

In S660, the base station delivers codebook indication signaling to the RIS panel.

In the embodiment, a codebook index number or a codebook is carried in the codebook indication signaling.

In S670, the RIS panel feeds back second reception acknowledgement signaling to the base station.

In the embodiment, after the RIS panel receives the codebook indication signaling, the RIS panel feeds back reception success information (that is, the second reception acknowledgement signaling) to the base station, if the RIS panel does not receive the codebook indication signaling, the RIS panel feeds back reception failure information to the base station, and if the base station receives the reception failure information of the RIS panel and does not receive the acknowledgement information, the codebook indication signaling is retransmitted.

In S680, the RIS panel reads a corresponding codebook and causes the corresponding codebook to take effect.

In the embodiment, codebooks are already stored in an RIS storage module, and the RIS panel reads the codebook corresponding to the codebook index number and causes the codebook corresponding to the codebook index number to take effect. The codebook is used for indicating a phase adjustment amount corresponding to each array element in the RIS panel. The phase adjustment amount is used for adjusting the phase relationship or amplitude relationship between an incoming signal and an outgoing signal. In the embodiment, the RIS panel loads the codebook so as to transmit a signal of the phase adjustment amount to a corresponding array element. Thus, the array element adjusts the radiation angle, direction, form, and the like of a corresponding beam according to the phase adjustment amount so that signal performance is adjusted and coverage performance is optimized.

In S690, the base station re-counts the current coverage performance.

In S6100, the management background performs determination according to the statistical information about the optimized coverage performance. If an expectation is met, normal scheduling is performed. Otherwise, it is considered to reduce the expected coverage range or the limit requirement on the RSRP threshold for performing optimization again.

In the embodiment, on the basis of adjusting the directivity and width of the beam, the coverage range is optimized and an array element activation mode is calculated and controlled in real time according to the KPI statistical information and the user experience feedback information so that the coverage range of the RIS in the cell is optimized and coverage robustness is improved.

In an embodiment, a coverage performance optimization scenario in this embodiment is consistent with the procedure in the preceding embodiment. The array element activation signaling of the RIS panel is described with examples. In this embodiment, the maximum number of array elements of the RIS panel in a horizontal direction and a vertical direction which are capable of being activated is 8*8.

Example 1: all the array elements are activated.

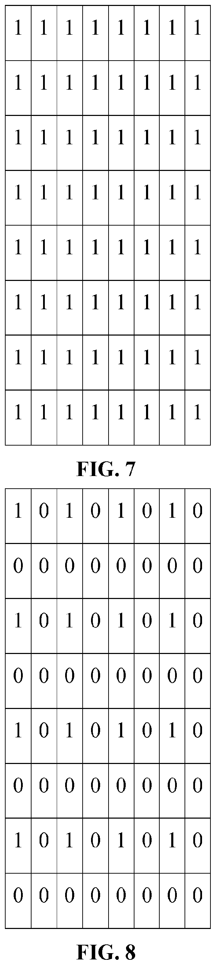

FIG. 7 is a schematic diagram of a configuration of another array element activation bitmap according to an embodiment of the present application. As shown in FIG. 7, all the array elements in the array element activation bitmap are set to 1.

The total number of activated array elements is set to 64 (the maximum). The horizontal interval between activated elements and the vertical interval between activated elements are set to 1, indicating that all the array elements are activated.

Example 2: an interval is set to 1, and interval activation and control are performed on the array elements of the RIS panel. This example is adaptable to the case where a carrier frequency varies, and the spacing between the activated array elements may be calculated according to an actual frequency. Alternatively, this form may be used in the case where multiple beams need to be generated.

FIG. 8 is a schematic diagram of a configuration of another array element activation bitmap according to an embodiment of the present application. FIG. 8 shows the arrangement of the array element activation bitmap.

The total number of activated array elements is set to 16 (the maximum). The horizontal interval between activated elements and the vertical interval between activated elements are set to 2.

Example 3: horizontal and vertical differentiation activation, as an example, may be applicable to the case where a horizontal coverage angle is different from a vertical coverage angle or the case where a horizontal coverage range is different from a vertical coverage range so that the variation of a beam width and the variation of a beam coverage area are controlled.

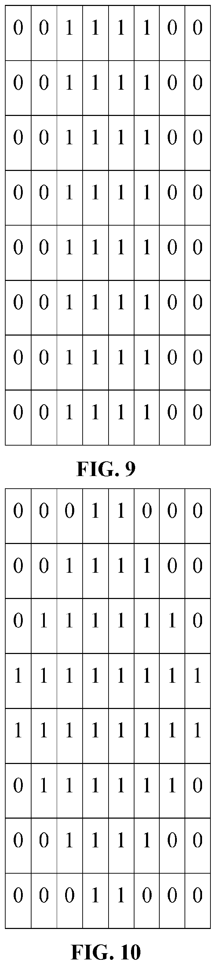

FIG. 9 is a schematic diagram of a configuration of another array element activation bitmap according to an embodiment of the present application. FIG. 9 shows the arrangement of the array element activation bitmap.

The number of activated array elements in a horizontal direction is set to 8, the number of activated array elements in a vertical direction is set to 4, the total number of activated array elements is set to 32, and each of a horizontal interval and a vertical interval is set to 1 (indicating continuous arrangement).

Example 4: any activation form is used. Array element activation is calculated through optimization and iteration performed according to an expected coverage area and an RSRP threshold. Optimal coverage effects can be implemented according to different scenarios. FIG. 10 is a schematic diagram of a configuration of another array element activation bitmap according to an embodiment of the present application. As shown in FIG. 10, the array element activation bitmap may be configured through the optimization and the iteration performed according to an expected coverage range and the RSRP threshold.

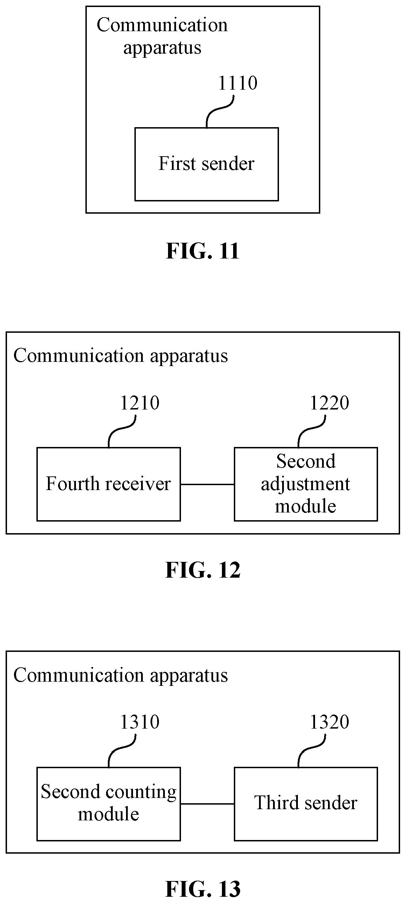

In an embodiment, FIG. 11 is a block diagram of a communication apparatus according to an embodiment of the present application. This embodiment is applied to a first communication node. As shown in FIG. 11, this embodiment includes a first sender 1110.

The first sender 1110 is configured to send array element activation signaling to a second communication node so that the second communication node adjusts a working state of an array element through the array element activation signaling, where the array element is coupled to the second communication node and is configured to transmit a cell signal.

In an embodiment, the communication apparatus applied to the first communication node further includes a first receiver or a generation module.

The first receiver is configured to receive a coverage performance optimization instruction sent by a third communication node, or the generation module is configured to generate a coverage performance optimization instruction in advance, where the coverage performance optimization instruction is used for instructing that a coverage performance optimization operation is performed on a to-be-optimized cell in the second communication node.

In an embodiment, the communication apparatus applied to the first communication node further includes a determination module.

The determination module is configured to determine an optimal array element activation mode of the to-be-optimized cell in the second communication node according to the current coverage performance of the to-be-optimized cell and expected coverage performance of the to-be-optimized cell.

In an embodiment, the communication apparatus applied to the first communication node further includes a second receiver and a second sender.

The second receiver is configured to receive first reception acknowledgement signaling which is fed back by the second communication node and corresponds to the array element activation signaling; and the second sender is configured to send codebook indication signaling or directivity signaling to the second communication node so that the second communication node switches to a corresponding beam according to the codebook indication signaling or the directivity signaling.

In an embodiment, the communication apparatus applied to the first communication node further includes a third receiver.

The third receiver is configured to receive second reception acknowledgement signaling which is fed back by the second communication node and corresponds to the codebook indication signaling or the directivity signaling.

In an embodiment, after the second communication node switches to the corresponding beam according to the codebook indication signaling or the directivity signaling, the communication apparatus applied to the first communication node further includes a first counting module and a first adjustment module.

The first counting module is configured to re-count the current coverage performance of the second communication node; and the first adjustment module is configured to readjust the expected coverage performance if the current coverage performance does not reach the expected coverage performance.

In an embodiment, the array element activation signaling includes at least one of the following: a coverage performance adjustment instruction or the optimal array element activation mode, where the coverage performance adjustment instruction includes at least one of the following: a coverage range adjustment instruction or an RSRP adjustment instruction, and the optimal array element activation mode includes the following parameters: an optimal activation state of the array element and the optimal activation number of the array element.

In an embodiment, the coverage performance adjustment instruction includes at least one of the following: a reflection beam coverage distance adjustment instruction, a reflection beam coverage width adjustment instruction, a reflection beam state adjustment instruction, or an array element activation bitmap.

In an embodiment, the reflection beam coverage distance adjustment instruction is used for indicating one of the following: the horizontal interval between activated array elements, the vertical interval between activated array elements, or the total number of activated array elements, the reflection beam coverage width adjustment instruction is used for indicating one of the following: the total number of horizontal activated array elements or the total number of vertical activated array elements, and the reflection beam state adjustment instruction is used for indicating an array element activation state.

In an embodiment, the array element activation state includes one of the following: an activated state or an inactivated state, where the activated state includes transmission or reflection.

In an embodiment, the array element activation signaling is included in one of the following signaling: a physical downlink control channel (PDCCH), medium access control-control element (MAC-CE) signaling, or radio resource control (RRC) signaling.

In an embodiment, the coverage performance optimization instruction includes at least one of the following: a maximum coverage distance, a maximum coverage range, the horizontal width of a coverage region and the vertical width of the coverage region, or an RSRP threshold of a coverage region.

In an embodiment, each of the codebook indication signaling and the directivity signaling is used for indicating at least one of the following parameters: the horizontal width of a beam and the vertical width of the beam, the number of radiated beams, a beam shape, or a beam form, where the codebook indication signaling carries one of the following: a codebook index number or a codebook.

In an embodiment, an activation mode of the array element in the second communication node includes one of the following: a mode in which the maximum total number of activated array elements in a horizontal direction is the same as the maximum total number of activated array elements in a vertical direction, an interval activation mode, a horizontal-direction and vertical-direction differentiation activation mode, or an activation mode optimized and iterated according to the expected coverage performance.

In an embodiment, the interval activation mode is applicable to one of the following cases: the case where a carrier frequency varies or the case where at least two beams are generated, and the horizontal-direction and vertical-direction differentiation activation mode is applicable to one of the following cases: the case where a horizontal coverage angle is different from a vertical coverage angle or the case where a horizontal coverage range is different from a vertical coverage range.

The communication apparatus provided in the embodiment is configured to implement the communication method applied to the first communication node in the embodiment shown in FIG. 1 and has similar implementation principles and technical effects, which are not repeated here.

In an embodiment, FIG. 12 is a block diagram of another communication apparatus according to an embodiment of the present application. This embodiment is applied to a second communication node. As shown in FIG. 12, a fourth receiver 1210 and a second adjustment module 1220 are included in this embodiment.

The fourth receiver 1210 is configured to receive array element activation signaling sent by a first communication node.

A second adjustment module 1220 is configured to adjust a working state of an array element according to the array element activation signaling, where the array element is coupled to the second communication node and is configured to transmit a cell signal.

In an embodiment, the communication apparatus applied to the second communication node further includes a first feedback module, a fifth receiver, and a switching module.

The first feedback module is configured to feed back first reception acknowledgement signaling corresponding to the array element activation signaling to the first communication node; the fifth receiver is configured to receive codebook indication signaling or directivity signaling sent by the first communication node; and the switching module is configured to switch to a corresponding beam according to the codebook indication signaling or the directivity signaling.

In an embodiment, the communication apparatus applied to the second communication node further includes a second feedback module.

The second feedback module is configured to feed back second reception acknowledgement signaling corresponding to the codebook indication signaling or the directivity signaling to the first communication node.

In an embodiment, the array element activation signaling includes at least one of the following: a coverage performance adjustment instruction or an optimal array element activation mode, where the coverage performance adjustment instruction includes at least one of the following: a coverage range adjustment instruction or an RSRP adjustment instruction, and the optimal array element activation mode includes the following parameters: an optimal activation state of the array element and the optimal activation number of the array element.

In an embodiment, the coverage performance adjustment instruction includes at least one of the following: a reflection beam coverage distance adjustment instruction, a reflection beam coverage width adjustment instruction, a reflection beam state adjustment instruction, or an array element activation bitmap.

In an embodiment, the reflection beam coverage distance adjustment instruction is used for indicating one of the following: the horizontal interval between activated array elements, the vertical interval between activated array elements, or the total number of activated array elements, the reflection beam coverage width adjustment instruction is used for indicating one of the following: the total number of horizontal activated array elements or the total number of vertical activated array elements, and the reflection beam state adjustment instruction is used for indicating an array element activation state.

In an embodiment, the array element activation state includes one of the following: an activated state or an inactivated state, where the activated state includes transmission or reflection.

In an embodiment, the array element activation signaling is included in one of the following signaling: a PDCCH, MAC-CE signaling, or RRC signaling.

In an embodiment, the coverage performance optimization instruction includes at least one of the following: a maximum coverage distance, a maximum coverage range, the horizontal width of a coverage region and the vertical width of the coverage region, or an RSRP threshold of a coverage region.

In an embodiment, each of the codebook indication signaling and the directivity signaling is used for indicating at least one of the following parameters: the horizontal width of a beam and the vertical width of the beam, the number of radiated beams, a beam shape, or a beam form, where the codebook indication signaling carries one of the following: a codebook index number or a codebook.

In an embodiment, an activation mode of the array element in the second communication node includes one of the following: a mode in which the maximum total number of activated array elements in a horizontal direction is the same as the maximum total number of activated array elements in a vertical direction, an interval activation mode, a horizontal-direction and vertical-direction differentiation activation mode, or an activation mode optimized and iterated according to expected coverage performance.

In an embodiment, the interval activation mode is applicable to one of the following cases: the case where a carrier frequency varies or the case where at least two beams are generated, and the horizontal-direction and vertical-direction differentiation activation mode is applicable to one of the following cases: the case where a horizontal coverage angle is different from a vertical coverage angle or the case where a horizontal coverage range is different from a vertical coverage range.

The communication apparatus provided in the embodiment is configured to implement the communication method applied to the second communication node in the embodiment shown in FIG. 2 and has similar implementation principles and technical effects, which are not repeated here.

In an embodiment, FIG. 13 is a block diagram of another communication apparatus according to an embodiment of the present application. This embodiment is applied to a third communication node. As shown in FIG. 13, this embodiment includes a second counting module 1310 and a third sender 1320.

The second counting module 1310 is configured to determine a to-be-optimized cell according to key performance indicator (KPI) statistical information and user experience feedback information.

The third sender 1320 is configured to send a coverage performance optimization instruction to a first communication node so that the first communication node sends array element activation signaling to a second communication node and the second communication node adjusts a working state of an array element through the array element activation signaling, where the array element is coupled to the second communication node and is configured to transmit a cell signal, and the coverage performance optimization instruction is used for instructing that a coverage performance optimization operation is performed on the to-be-optimized cell in the second communication node.

In an embodiment, the array element activation signaling includes at least one of the following: a coverage performance adjustment instruction or an optimal array element activation mode, where the coverage performance adjustment instruction includes at least one of the following: a coverage range adjustment instruction or an RSRP adjustment instruction, and the optimal array element activation mode includes the following parameters: an optimal activation state of the array element and the optimal activation number of the array element.

In an embodiment, the coverage performance adjustment instruction includes at least one of the following: a reflection beam coverage distance adjustment instruction, a reflection beam coverage width adjustment instruction, a reflection beam state adjustment instruction, or an array element activation bitmap.

In an embodiment, the reflection beam coverage distance adjustment instruction is used for indicating one of the following: the horizontal interval between activated array elements, the vertical interval between activated array elements, or the total number of activated array elements, the reflection beam coverage width adjustment instruction is used for indicating one of the following: the total number of horizontal activated array elements or the total number of vertical activated array elements, and the reflection beam state adjustment instruction is used for indicating an array element activation state.

In an embodiment, the array element activation state includes one of the following: an activated state or an inactivated state, where the activated state includes transmission or reflection.

In an embodiment, the array element activation signaling is included in one of the following signaling: a PDCCH, MAC-CE signaling, or RRC signaling.

In an embodiment, the coverage performance optimization instruction includes at least one of the following: a maximum coverage distance, a maximum coverage range, the horizontal width of a coverage region and the vertical width of the coverage region, or an RSRP threshold of a coverage region.

In an embodiment, each of the codebook indication signaling and the directivity signaling is used for indicating at least one of the following parameters: the horizontal width of a beam and the vertical width of the beam, the number of radiated beams, a beam shape, or a beam form, where the codebook indication signaling carries one of the following: a codebook index number or a codebook.

In an embodiment, an activation mode of the array element in the second communication node includes one of the following: a mode in which the maximum total number of activated array elements in a horizontal direction is the same as the maximum total number of activated array elements in a vertical direction, an interval activation mode, a horizontal-direction and vertical-direction differentiation activation mode, or an activation mode optimized and iterated according to expected coverage performance.

In an embodiment, the interval activation mode is applicable to one of the following cases: the case where a carrier frequency varies or the case where at least two beams are generated, and the horizontal-direction and vertical-direction differentiation activation mode is applicable to one of the following cases: the case where a horizontal coverage angle is different from a vertical coverage angle or the case where a horizontal coverage range is different from a vertical coverage range.

The communication apparatus provided in the embodiment is configured to implement the communication method applied to the third communication node in the embodiment shown in FIG. 3 and has similar implementation principles and technical effects, which are not repeated here.

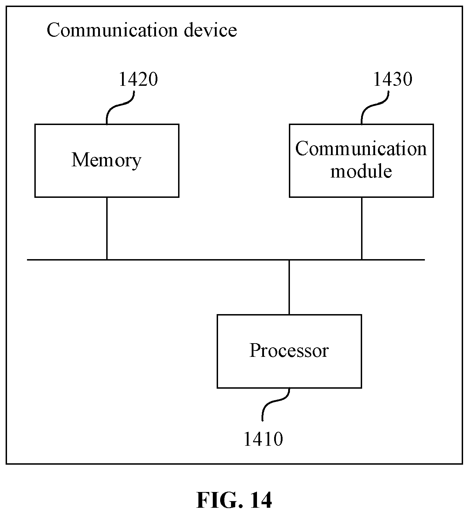

FIG. 14 is a structural diagram of a communication device according to an embodiment of the present application. As shown in FIG. 14, the communication device provided in the present application includes a processor 1410, a memory 1420, and a communication module 1430. One or more processors 1410 may be configured in the device. FIG. 14 uses one processor 1410 as an example. One or more memories 1420 may be configured in the device. FIG. 14 uses one memory 1420 as an example. The processor 1410, the memory 1420, and the communication module 1430 of the device may be connected by a bus or otherwise. FIG. 14 uses connection by a bus as an example. In the embodiment, the device may be a base station.

As a computer-readable storage medium, the memory 1420 may be configured to store software programs and computer-executable programs and modules, such as program instructions/modules (for example, the first sender 1110 in the communication apparatus applied to the first communication node) corresponding to the device according to any embodiment of the present application. The memory 1420 may include a program storage region and a data storage region. The program storage region may store an operating system and an application program required by at least one function. The data storage region may store data created according to the use of the device. Additionally, the memory 1420 may be, for example, a high-speed random-access memory or a nonvolatile memory such as at least one disk memory, a flash memory, or another nonvolatile solid-state memory. In some examples, the memory 1420 may be a memory remote from the processor 1410. The remote memory may be connected to the device by a network. Examples of the preceding network include, but are not limited to, the Internet, an intranet, a local area network, a mobile communication network, and a combination thereof.

The communication module 1430 is configured to communicatively interact with other communication nodes.

In the case where the communication device is the first communication node, the device may be configured to perform the communication method applied to the first communication node according to any preceding embodiment and has corresponding functions and effects.

In the case where the communication device is the second communication node, the device may be configured to perform the communication method applied to the second communication node according to any preceding embodiment and has corresponding functions and effects.

In the case where the communication device is the third communication node, the device may be configured to perform the communication method applied to the third communication node according to any preceding embodiment and has corresponding functions and effects.

An embodiment of the present application further provides a storage medium including a computer-executable instruction, where the computer-executable instruction is configured to perform a communication method applied to a first communication code when the computer-executable instruction is executed by a processor in a computer. The method includes: sending array element activation signaling to a second communication node so that the second communication node adjusts a working state of an array element through the array element activation signaling, where the array element is coupled to the second communication node and is configured to transmit a cell signal.

An embodiment of the present application further provides a storage medium including a computer-executable instruction, where the computer-executable instruction is configured to perform a communication method applied to a second communication code when the computer-executable instruction is executed by a processor in a computer. The method includes: receiving array element activation signaling sent by a first communication node; and adjusting a working state of an array element according to the array element activation signaling, where the array element is coupled to the second communication node and is configured to transmit a cell signal.

An embodiment of the present application further provides a storage medium including a computer-executable instruction, where the computer-executable instruction is configured to perform a communication method applied to a third communication code when the computer-executable instruction is executed by a processor in a computer. The method includes: determining a to-be-optimized cell according to key performance indicator (KPI) statistical information and user experience feedback information; and sending a coverage performance optimization instruction to a first communication node so that the first communication node sends array element activation signaling to a second communication node and the second communication node adjusts a working state of an array element through the array element activation signaling, where the array element is coupled to the second communication node and is configured to transmit a cell signal, and the coverage performance optimization instruction is used for instructing that a coverage performance optimization operation is performed on the to-be-optimized cell in the second communication node.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, applied to a first communication node, comprising:
sending array element activation signaling to a second communication node so that the second communication node adjusts a working state of an array element through the array element activation signaling, wherein the array element is coupled to the second communication node and is configured to transmit a cell signal.

2. The method according to claim 1, further comprising:
receiving a coverage performance optimization instruction sent by a third communication node or generating a coverage performance optimization instruction in advance, wherein the coverage performance optimization instruction is used for instructing that a coverage performance optimization operation is performed on a to-be-optimized cell in the second communication node.

3. The method according to claim 1, further comprising:
determining an optimal array element activation mode of the to-be-optimized cell in the second communication node according to current coverage performance of the to-be-optimized cell and expected coverage performance of the to-be-optimized cell.

4. The method according to claim 1, further comprising:
receiving first reception acknowledgement signaling which is fed back by the second communication node and corresponds to the array element activation signaling; and
sending codebook indication signaling or directivity signaling to the second communication node so that the second communication node switches to a corresponding beam according to the codebook indication signaling or the directivity signaling.

5. The method according to claim 1, further comprising:
receiving second reception acknowledgement signaling which is fed back by the second communication node and corresponds to the codebook indication signaling or the directivity signaling.

6. The method according to claim 4, wherein after the second communication node switches to the corresponding beam according to the codebook indication signaling or the directivity signaling, the method further comprises:
re-counting current coverage performance of the second communication node; and
in response to the current coverage performance not reaching the expected coverage performance, readjusting the expected coverage performance.

7. The method according to any one of claims 1 to 6, wherein the array element activation signaling comprises at least one of the following: a coverage performance adjustment instruction or an optimal array element activation mode;
wherein the coverage performance adjustment instruction comprises at least one of the following: a coverage range adjustment instruction or a reference signal receiving power, RSRP, adjustment instruction; and
the optimal array element activation mode comprises the following parameters: an optimal activation state of the array element and an optimal activation number of the array element.

8. The method according to claim 7, wherein the coverage performance adjustment instruction comprises at least one of the following: a reflection beam coverage distance adjustment instruction, a reflection beam coverage width adjustment instruction, a reflection beam state adjustment instruction, or an array element activation bitmap.

9. The method according to claim 8, wherein the reflection beam coverage distance adjustment instruction is used for indicating one of the following: a horizontal interval between activated array elements, a vertical interval between activated array elements, or a total number of activated array elements;
the reflection beam coverage width adjustment instruction is used for indicating one of the following: a total number of horizontal activated array elements or a total number of vertical activated array elements; and
the reflection beam state adjustment instruction is used for indicating an array element activation state.

10. The method according to claim 9, wherein the array element activation state comprises one of the following: an activated state or an inactivated state;
wherein the activated state comprises transmission or reflection.

11. The method according to any one of claims 1 to 6, wherein the array element activation signaling is comprised in one of the following signaling: a physical downlink control channel, PDCCH, medium access control-control element, MAC-CE, signaling, or radio resource control, RRC, signaling.

12. The method according to claim 2, wherein the coverage performance optimization instruction comprises at least one of the following: a maximum coverage distance, a maximum coverage range, a horizontal width of a coverage region and a vertical width of the coverage region, or an RSRP threshold of a coverage region.

13. The method according to claim 4, wherein each of the codebook indication signaling and the directivity signaling is used for indicating at least one of the following parameters: a horizontal width of a beam and a vertical width of the beam, a number of radiated beams, a beam shape, or a beam form;
wherein the codebook indication signaling carries one of the following: a codebook index number or a codebook.

14. The method according to claim 1, wherein an activation mode of an array element in the second communication node comprises one of the following: a mode in which a maximum total number of activated array elements in a horizontal direction is the same as a maximum total number of activated array elements in a vertical direction, an interval activation mode, a horizontal-direction and vertical-direction differentiation activation mode, or an activation mode optimized and iterated according to expected coverage performance.

15. The method according to claim 14, wherein the interval activation mode is applicable to one of the following cases: a case where a carrier frequency varies or a case where at least two beams are generated; and
the horizontal-direction and vertical-direction differentiation activation mode is applicable to one of the following cases: a case where a horizontal coverage angle is different from a vertical coverage angle or a case where a horizontal coverage range is different from a vertical coverage range.

16. A communication method, applied to a second communication node, comprising:
receiving array element activation signaling sent by a first communication node; and
adjusting a working state of an array element according to the array element activation signaling, wherein the array element is coupled to the second communication node and is configured to transmit a cell signal.

17. The method according to claim 16, further comprising:
feeding back first reception acknowledgement signaling corresponding to the array element activation signaling to the first communication node;
receiving codebook indication signaling or directivity signaling sent by the first communication node; and
switching to a corresponding beam according to the codebook indication signaling or the directivity signaling.

18. The method according to claim 17, further comprising:
feeding back second reception acknowledgement signaling corresponding to the codebook indication signaling or the directivity signaling to the first communication node.

19. A communication method, applied to a third communication node, comprising:
determining a to-be-optimized cell according to key performance indicator, KPI, statistical information and user experience feedback information; and
sending a coverage performance optimization instruction to a first communication node so that the first communication node sends array element activation signaling to a second communication node and the second communication node adjusts a working state of an array element through the array element activation signaling, wherein the array element is coupled to the second communication node and is configured to transmit a cell signal, and the coverage performance optimization instruction is used for instructing that a coverage performance optimization operation is performed on the to-be-optimized cell in the second communication node.

20. A communication device, comprising a communication module, a memory, and at least one processor, wherein
the communication module is configured to perform communication interaction with another communication node;
the memory is configured to store at least one program; and
when the at least one program is executed by the at least one processor, the at least one processor is caused to implement the communication method according to any one of claims 1 to 15, 16 to 18, or 19.

21. A storage medium storing a computer program, wherein the communication method according to any one of claims 1 to 15, 16 to 18, or 19 is implemented when the computer program is executed by a processor.
